# EUROPÄISCHE PATENTSCHRIFT

(11) **EP 0 875 132 B1**
(45) Veröffentlichungstag und Bekanntmachung des Hinweises auf die Patenterteilung: **30.05.2001**
(21) Anmeldenummer: 98105369.7
(22) Anmeldetag: 25.03.1998
(51) Int. Cl.: A01B 73/04

(54) **Klapprahmen**
Folding frame
Bati repliable

(30) Priorität: 05.04.1997 DE 19714121
(43) Veröffentlichungstag der Anmeldung: 04.11.1998
(73) Patentinhaber: Kverneland Soest GmbH, 59494 Soest (DE)
(72) Erfinder: Schulte, Reinold, Dipl.-Ing., 33106 Paderborn (DE); Beier, Carsten, Dipl.-Ing., 33154 Salzkotten (DE)
(74) Vertreter: Patentanwälte Rehberg + Hüppe

(56) Entgegenhaltungen:
- DE-A- 2 220 162
- DE-A- 4 018 422
- US-A- 3 844 358

## Beschreibung

Die Erfindung bezieht sich auf einen Klapprahmen gemäß Oberbegriff des Anspruchs 1.

Unter der Bezeichnung UNICORN-3 ist eine Sämaschine der Anmelderin mit einem Klapprahmen der eingangs beschriebenen Art bekannt. Dieser Klapprahmen weist insgesamt drei Teilrahmen auf, an denen jeweils mehrere Sägeräte nebeneinander gelagert sind.

Ein mittlerer, erster Teilrahmen ist zur Dreipunktaufhängung an einem Schlepper vorgesehen. Zwei äußere, d. h. ein zweiter und ein dritter, Teilrahmen sind jeweils über eine Parallelogrammführung mit zwei Koppelstangen an den ersten Teilrahmen angelenkt. Beim Verschwenken des zweiten und des dritten Teilrahmens aus der Arbeitsstellung in die Transportstellung werden der zweite und der dritte Teilrahmen durch ihre Parallelogrammführungen parallel zu dem ersten Teilrahmen geführt, bis sie nebeneinander über den ersten Teilrahmen angeordnet sind. Bei diesem Aufbau und einer maximal zulässigen Transportbreite von drei Metern kann eine maximale Arbeitsbreite des Klapprahmens und damit der gesamten Sämaschine von sechs Metern realisiert werden, wovon drei Meter auf den ersten Teilrahmen und jeweils 1,5 Meter auf den zweiten und den dritten Teilrahmen entfallen.

Von der Firma Horsch ist eine Sämaschine mit einem Klapprahmen bekannt, bei dem zusätzlich zu dem zuvor beschriebenen Stand der Technik zwei weitere Teilrahmen vorgesehen sind. Dieser vierte und fünfte Teilrahmen sind ebenfalls über jeweils eine Parallelogrammführung mit zwei Koppelstangen mit dem ersten Teilrahmen verbunden. Zum Erreichen der Transportstellung des Klapprahmens werden der vierte und der fünfte Teilrahmen über den zweiten und der dritten Teilrahmen verschwenkt, die sich in der Transportstellung über dem ersten Teilrahmen befinden. So sind die Teilrahmen in der Transportstellung in drei Ebenen übereinander angeordnet. Der Aufbau der bekannten Sämaschine der Firma Horsch ermöglicht zwar eine Arbeitsbreite des Klapprahmens bzw. der Sämaschine von neun Metern bei Einhaltung der maximalen Transportbreite von drei Metern, hierfür ist aber ein erheblicher baulicher Aufwand zu betreiben. Darüberhinaus besteht insbesondere bei großer Höhe der Sägeräte die Gefahr, daß die zweiten bis vierten Teilrahmen beim Verschwenken aus der Arbeitsstellung in die Transportstellung miteinander kollidieren. Hierbei ist zu berücksichtigen, daß auch die für einen Straßentransport zulässige Transporthöhe auf vier Meter begrenzt ist und so keine großen Abstände der Teilrahmen in vertikaler Richtung möglich sind.

Es sind auch Sämaschinen mit Klapprahmen mit drei Teilrahmen und Arbeitsbreiten von über sechs Metern bekannt. Diese Klapprahmen entsprechen jedoch nicht der eingangs beschriebenen Art. Vielmehr weisen die äußeren Teilrahmen Ausleger auf, über die sie direkt an den mittleren Teilrahmen angelenkt sind. Die äußeren Teilrahmen sind so in eine Transportstellung über den ersten Teilrahmen verschwenkbar, in der sie etwa senkrecht zu dem ersten Teilrahmen ausgerichtet sind. Diese Ausrichtung der äußeren Teilrahmen der Transportstellung macht ein vollständiges Entleeren der einzelnen Sägeräte an den äußeren Teilrahmen vor dem Hochschwenken von der Arbeitsstellung in die Transportstellung erforderlich. Anderenfalls besteht die Gefahr eines Saatgutverlusts beim Transport der Sämaschine in der Transportstellung.

Bei allen untereinander parallelogrammgeführten Teilrahmen ist eine schlechte Anpassung der jeweiligen mehrreihigen landwirtschaftlichen Maschine an Bodenunebenheiten gegeben. Eine weitere Anordnung ist aus DE-A-2220162 bekannt.

Der Erfindung liegt die Aufgabe zugrunde, einen Klapprahmen der eingangs beschriebenen Art aufzuzeigen, der bei beschränkter maximaler Transportbreite und geringem baulichem Aufwand das Erreichen einer maximalen Arbeitsbreite ermöglicht, ohne daß beispielsweise bei einer Sämaschine die Sägeräte vor dem Einnehmen der Transportstellung entleert werden müssen'.

Diese Aufgabe wir erfindungsgemäß durch den in Anspruch 1 definierten Klapprahmen gelöst. Das heißt, daß bei dem neuen Klapprahmen zwar eine Koppelstange zwischen dem ersten Teilrahmen und dem zweiten Teilrahmen vorgesehen ist, daß diese Koppelstange aber nicht Bestandteil einer mechanischen Parallelogrammführung für den zweiten Teilrahmen gegenüber dem ersten Teilrahmen ist. Vielmehr ist eine Schwenkeinrichtung vorgesehen, die sowohl die Koppelstange gegenüber dem ersten Teilrahmen als auch den zweiten Teilrahmen gegenüber der Koppelstange verschwenken kann. Nur wenn diese beiden Schwenkbewegungen miteinander synchronisiert werden, ergibt sich eine parallele Bewegung des zweiten Teilrahmens gegenüber dem ersten Teilrahmen. Auf diese Bewegung ist die

Schwenkeinrichtung jedoch nicht beschränkt. Besondere Ausführungsarten des Erfindung sind in den Unteransprüchen enthalten.

Der neue Klapprahmen weist einen besonders übersichtlichen Aufbau auf, da der zweite Teilrahmen nur über die Koppelstange mit dem ersten Teilrahmen verbunden sein muß. Mit dieser Verbindung ist die rein mechanische Verbindung der beiden Teilrahmen gemeint. So schließt die Verbindung der beiden Teilrahmen ausschließlich über die Koppelstangen nicht aus, daß zusätzlich irgendwelche Leitungen zwischen den beiden Teilrahmen verlaufen. Weil die Verbindung der beiden Teilrahmen ausschließlich über die Koppelstange den baulichen Aufwand für den neuen Klapprahmen reduziert, spielt es keine so große Rolle, daß die Schwenkeinrichtung bei dem neuen Klapprahmen zwei Betätigungselemente für das Verschwenken des zweiten Teilrahmens gegenüber dem ersten Teilrahmen aufzuweisen hat. Dabei wirkt ein erstes Betätigungselement zwischen dem ersten Teilrahmen und der Koppelstange und ein zweites Betätigungselement zwischen dem zweiten Teilrahmen und der Koppelstange.

Die beiden Betätigungselemente können Drehantriebe aufweisen, denen jedoch eine starke Untersetzung nachzuordnen ist. Vorzugsweise sind die Betätigungselemente Hydraulikzylinder, die an dem ersten Teilrahmen und der Koppelstange bzw. dem zweiten Teilrahmen und der Koppelstange angreifen.

Um das Verschwenken des zweiten Teilrahmens gegenüber dem ersten Teilrahmen mit der Schwenkeinrichtung zu überwachen, können zwischen dem ersten Teilrahmen und der Koppelstange und zwischen dem zweiten Teilrahmen und der Koppelstange Winkelgeber vorgesehen sein.

Bei den Winkelgebern kann es sich um sogenannte Encoder, d. h. inkrementale Weggeber, handeln. Ausreichend sind jedoch auch einfache Potentiometer. Die Winkelgeber müssen nicht unmittelbar als Winkelgeber ausgebildet sein. Es kann sich auch um lineare Weggeber handeln, die an den ersten Teilrahmen und die Koppelstange, bzw. den zweiten Teilrahmen und die Koppelstange angelenkt sind. Interessant erscheint in diesem Zusammenhang die Verwendung eines bekannten Hydraulikzylinders mit integriertem Weggeber bei dem neuen Klapprahmen.

Bei dem neuen Klapprahmen ist ein dritter Teilrahmen vorgesehen, wobei eine weitere Koppelstange derart an den ersten Teilrahmen und an den dritten Teilrahmen angelenkt ist, daß der dritte Teilrahmen mit der Schwenkeinrichtung aus der Arbeitsstellung, in der er quer zu der Arbeitsrichtung der Maschine und neben dem ersten Teilrahmen angeordnet ist, in die Transportstellung, in der er über dem ersten Teilrahmen und etwa parallel zu diesem angeordnet ist, schwenkbar ist, und wobei mit der Schwenkeinrichtung die Koppelstange gegenüber dem ersten Teilrahmen und davon getrennt der dritte Teilrahmen gegenüber der Koppelstange verschwenkbar ist. Der dritte Teilrahmen ist in der Arbeitsstellung vorzugsweise symmetrisch zu dem zweiten Teilrahmen angeordnet.

Da die Koppelstange zwischen dem ersten Teilrahmen und dem zweiten Teilrahmen teleskopierbar ist, kann der dritte Teilrahmen in der Transportstellung über dem zweiten Teilrahmen angeordnet werden. So ist mit einem dreiteiligen Klapprahmen und einer Transportbreite von drei Metern eine Arbeitsbreite von neun Metern realisierbar, ohne daß die äußeren Teilrahmen in der Transportstellung senkrecht zu dem mittleren Teilrahmen ausgerichtet werden müssen.

Um eine gute Anpassung der mehrreihigen landwirtschaftlichen Maschine an Bodenunebenheiten zu ermöglichen, ist der zweite Teilrahmen gegenüber der Koppelstange und gegebenenfalls der dritte Teilrahmen gegenüber der weiteren Koppelstange in der Arbeitsstellung des Klapprahmens zumindest über einen begrenzten Winkel frei verschwenkbar. Dabei sind der zweite Teilrahmen und gegebenenfalls der dritte Teilrahmen jeweils mit zwei Stützrädern oder sonstigen Bodenabstützungen zu versehen, die die Relativlage des jeweiligen Teilrahmens zum Boden definieren.

Um das freie Verschwenken der äußeren Teilrahmen gegenüber ihren Koppelstangen zu erreichen, können die zwischen den Koppelstangen und den Teilrahmen wirkenden Betätigungselemente kraftlos geschaltet werden. So wäre ein Hydraulikzylinder drucklos zu schalten. Bevorzugt ist es jedoch, wenn der zweite Teilrahmen gegenüber der Koppelstange und gegebenenfalls der dritte Teilrahmen gegenüber der weiteren Koppelstange ein Winkelspiel von der Größe des begrenzten Winkels, um den die freie Verschwenkbarkeit gegeben sein soll, aufweist, wobei dieses Winkelspiel durch einen in einem Langloch geführten Bolzen definiert ist. Im Gegensatz zu einer Kraftlosschaltung der Betätigungselemente zwischen den Koppelstangen und den äußeren Teilrahmen verhindert das auf den begrenzten Winkel beschränkte Winkelspiel ein übermäßiges Verschwenken der äußeren Teilrahmen gegenüber dem mittleren Teilrahmen, das nichts mehr mit der Anpassung der äußeren Teilrahmen an Bodenunebenheiten zu tun haben kann. Das begrenzte Winkelspiel ist für das Erreichen der Transportstellung des Klapprahmens unerheblich.

Vorzugsweise ist für die Schwenkeinrichtung eine automatische Steuerung vorgesehen, die beim Überführen des zweiten Teilrahmens und gegebenenfalls des dritten Teilrahmens aus der Arbeitsstellung in die Transportstellung zunächst die Koppelstange gegenüber dem ersten Teilrahmen verschwenkt und dabei die Winkellage zwischen der Koppelstange und dem zweiten bzw. dritten Teilrahmen festhält. Erst anschließend wird dann der äußere Teilrahmen gegenüber der Koppelstange verschwenkt, um wieder eine etwa horizontale Ausrichtung des äußeren Teilrahmens zu erhalten. Durch diese Abfolge der Schwenkbewegungen werden Kollisionen auch zwischen höheren Geräten an den Teilrahmen beim Verlassen der Arbeitsstellung soweit möglich verhindert.

Wenn in der Transportstellung der zweite Teilrahmen über dem ersten Teilrahmen und der dritte Teilrahmen über dem zweiten Teilrahmen angeordnet ist, kann die Steuerung zum Erreichen der Transportstellung beim Aufeinanderzuschwenken der beiden Koppelstangen den zweiten Teilrahmen und den dritten Teilrahmen etwa parallel zueinander gegenüber dem ersten Teilrahmen verkippen, wobei der zweite Teilrahmen von dem dritten Teilrahmen weg von unten schräg nach oben ausgerichtet ist. Auf diese Weise wird beim Erreichen der Transportstellung ein Kollidieren der Geräte an den einzelnen Teilrahmen soweit eben möglich verhindert, indem diese Geräte in allen Schwenkstellungen der Teilrahmen einen größtmöglichen Abstand aufweisen.

Die Erfindung wird im folgenden anhand eines Ausführungsbeispiels näher erläutert und beschrieben. Dabei zeigt:
- Figur 1: eine Hälfte der Klapprahmens in der Arbeitsstellung,
- Figur 2: die Hälfte des Klapprahmens beim Verlassen der Arbeitsstellung,
- Figur 3: die Hälfte des Klapprahmens zwischen der Arbeitsstellung und einer Transportstellung,
- Figur 4: den vollständigen Klapprahmen beim Erreichen der Transportstellung und
- Figur 5: den vollständigen Klapprahmen in der Transportstellung.

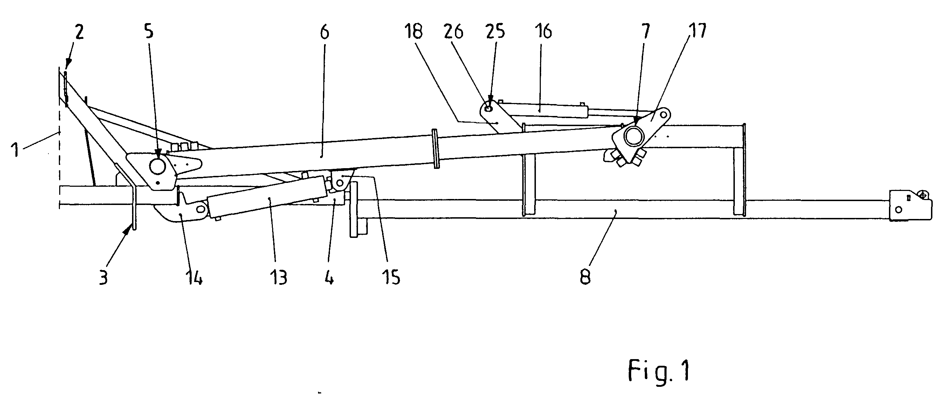

Der in den Figuren 1 bis 5 wiedergegebene Klapprahmen weist einen Aufbau auf, der etwa spiegelsymmetrisch zu einer Längsmittelebene 1 ist. Die Längsmittelebene 1 verläuft durch den oberen zentralen Lagerpunkt 2 einer Dreipunktaufhängung 2, 3, über die der Klapprahmen an einen nicht dargestellten Schlepper anhängbar ist. Starr mit der Dreipunktaufhängung 2, 3 ist ein erster Teilrahmen 4 verbunden. Der Teilrahmen 4 wird durch die Längsmittelebene 1 in zwei gleiche Hälften unterteilt. Um den ersten Teilrahmen 4 ist über ein Gelenk 5 eine Koppelstange 6 angelenkt. An dem freien Ende der Koppelstange 6 ist über ein Gelenk 7 ein zweiter Teilrahmen 8 angelenkt. Auf der gegenüberliegenden Seite der Längsmittelebene 1 ist über ein Gelenk 9 eine weitere Koppelstange 10 an den ersten Teilrahmen 4 angelenkt. An das freie Ende der Koppelstange 10 ist über ein Gelenk 11 ein dritter Teilrahmen 12 angelenkt.

Der Aufbau des Klapprahmens ist in sofern nicht symmetrisch zu der Längsmittelebene 1, als daß die Koppelstange 6 im Gegensatz zu der weiteren Koppelstange 10 teleskopierbar ausgebildet ist. Das heißt, die Länge der Koppelstange 6 zwischen dem Gelenk 5 und dem Gelenk 7 ist veränderbar, wozu die Koppelstange 6 zweiteilig ausgebildet und ein im Inneren der Koppelstange 6 angeordneter, nicht sichtbarer Hydraulikzylinder vorgesehen ist. Ein Hydraulikzylinder 13 ist zum Verschwenken der Koppelstange 6 gegenüber dem ersten Teilrahmen 4 vorgesehen. Der Hydraulikzylinder 13 greift hierzu über Laschen 14 und 15 an dem ersten Teilrahmen 4 und der Koppelstange 6 an. Die Laschen 14 und 15 sind starr mit dem ersten Teilrahmen 4 bzw. der Koppelstange 6 verbunden. Ein Hydraulikzylinder 16 dient zum Verschwenken des zweiten Teilrahmens 8 gegenüber der Koppelstange 6 um das Gelenk 7. Der Hydraulikzylinder 16 greift an einer drehfest an der Koppelstange 6 angeordneten Lasche 17 und einer starr an dem zweiten Teilrahmen 8 angebrachten Lasche 18 an. In entsprechender Anordnung sind ein Hydraulikzylinder 19, der über eine Lasche 20 an den ersten Teilrahmen 4 und über eine Lasche 21 an der weiteren Koppelstange 10 angreift, und ein Hydraulikzylinder 22, der über eine Lasche 23 an der weiteren Koppelstange 10 und über eine Lasche 24 an dem dritten Teilrahmen 12 angreift, vorgesehen. Die Hydraulikzylinder 13, 16, 19 und 21 bilden eine Schwenkeinrichtung, zu der auch eine zeichnerisch nicht wiedergegebene Steuerung gehört. Die Steuerung steuert ebenfalls nicht zeichnerisch wiedergegebene Ventile, die die Hydraulikzylinder 13, 16, 19 und 22 sowie den Hydraulikzylinder in der teleskopierbaren Koppelstange 6 mit Hydraulikmedium versorgen.

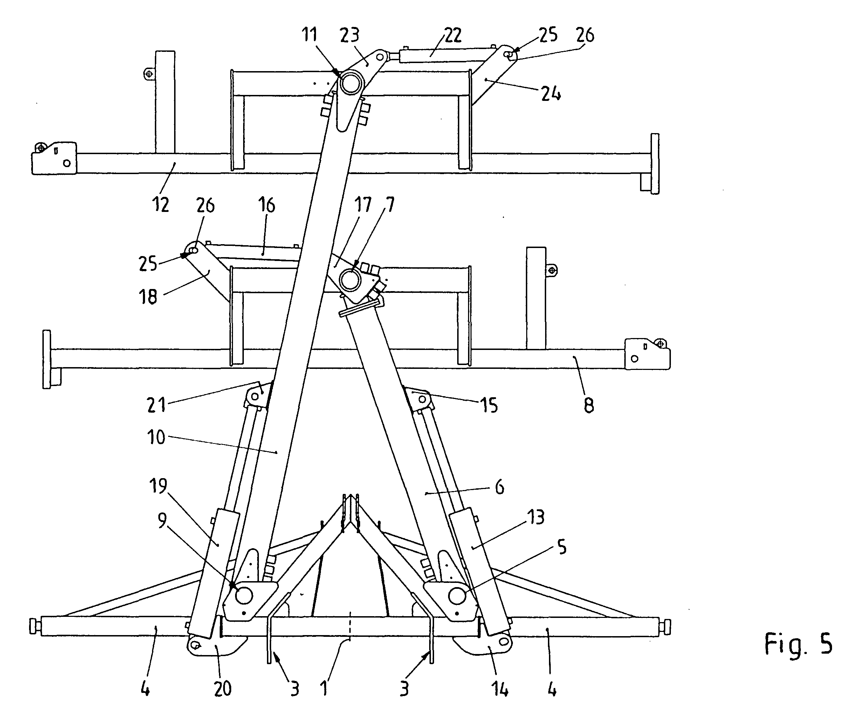

Als Eingangswerte verarbeitet die Steuerung Ausgangssignale von Winkelgebern, die an den Gelenken 5, 7, 9 und 11 vorgesehen aber nicht zeichnerisch wiedergegeben sind, und eines der teleskopierbaren Koppelstange 6 zugeordneten und ebenfalls nicht zeichnerisch wiedergegebenen Weggebers. Ferner nimmt die Steuerung die Befehle entgegen, den Klapprahmen aus der in Figur 1 dargestellten Arbeitsstellung in die in Figur 5 dargestellte Transportstellung und umgekehrt aus der Transportstellung in die Arbeitsstellung zu überführen. Das Überführen des Klapprahmens aus der Transportstellung in die Arbeitsstellung entspricht dem Überführen aus der Arbeitsstellung in die Transportstellung, so daß im folgenden anhand der Figuren 1 bis 5 nur der letzte Vorgang beschrieben wird.

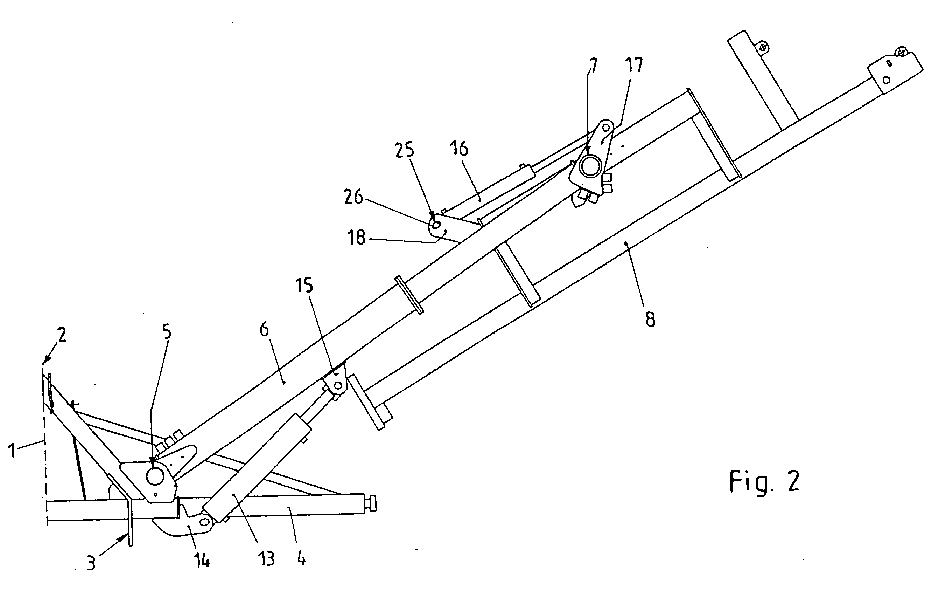

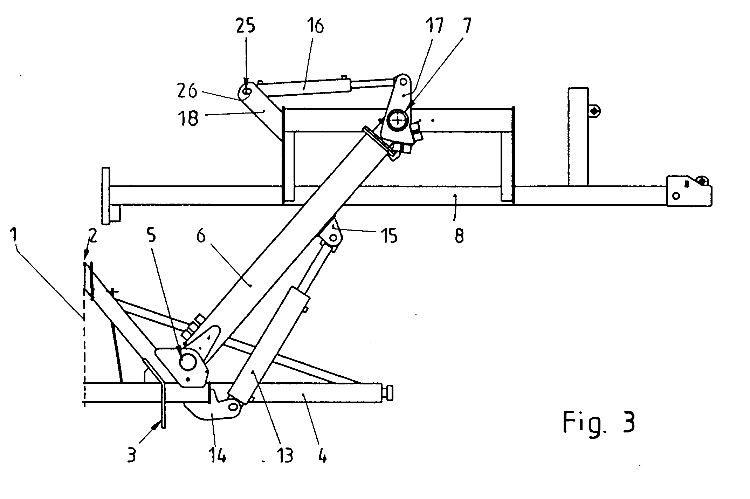

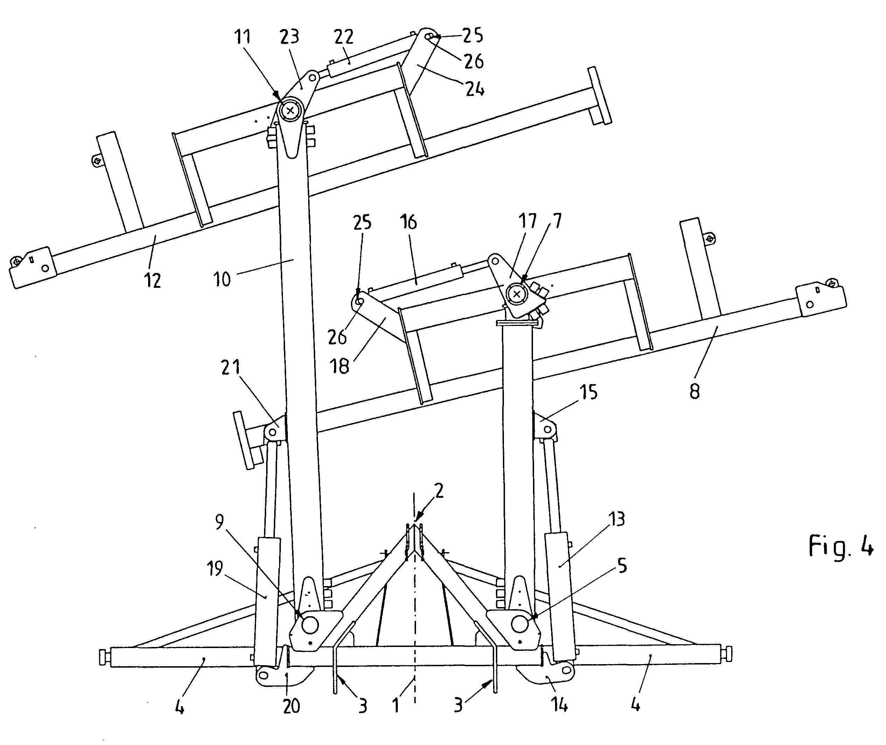

In der Transportstellung gemäß Figur 1 sind die äußeren Teilrahmen 8 und 12 ebenso wie der mittlere Teilrahmen 4 quer zur Arbeitsrichtung einer Maschine, deren Bestandteil der Klapprahmen ist, angeordnet. Sämtliche Teilrahmen 4, 8 und 12 sind dabei in ihrer Haupterstreckungsrichtung nebeneinander angeordnet. In der Arbeitsstellung gemäß Figur 1 sind die äußeren Teilrahmen 8 und 12 in begrenztem Maß gegenüber den zugehörigen Koppelstangen 6 und 10 verschwenkbar, damit sich an den Teilrahmen 8 und 12 angeordnete Geräte unabhängig von Geräten an dem ersten Teilrahmen 4 dem Bodenverlauf anpassen können. Die Verschwenkbarkeit der äußeren Teilrahmen 8 und 12 gegenüber den Koppelstangen 6 und 10 wird durch ein Langloch 25 in den Laschen 18 und 24 erreicht, in dem ein mit den Hydraulikzylindern 16 verbundener Bolzen 26 geführt wird, wobei der Hydraulikzylinder 16 über den Bolzen an den Laschen 18 und 24 angreifen. Das Winkelspiel der äußeren Teilrahmen 8 und 12 gegenüber den Koppelstangen 6 und 10 bleibt beim Verlassen der Arbeitsstellung gemäß Figur 1 bestehen. Zum Verlassen der Arbeitsstellung gemäß Figur 1 werden die Koppelstangen 6 und 10 mit den Hydraulikzylindern 13 und 19 gemäß Figur 2 um die Gelenke 5 und 9 gegenüber dem ersten Teilrahmen 4 nach oben verschwenkt. Dabei bleibt die Abordnung zwischen den äußeren Teilrahmen 8 und 12 und den Koppelstangen 6 und 10 starr. Das heißt, die Hydraulikzylinder 16 und 22 werden noch nicht betätigt. Vielmehr entspricht ihre Länge noch der Arbeitsstellung. Durch dieses Vorgehen werden Kollisionen auch zwischen bauhohen Geräten an den mittleren Teilrahmen 4 und den äußeren Teilrahmen 8 und 12 weitmöglichst verhindert. Wie in Figur 3 gezeigt, werden zwischen der Arbeitsstellung und der Transportstellung die äußeren Teilrahmen 8 und 12 mittels der Hydraulikzylinder 16 und 22 wieder horizontal ausgerichtet, währen die Koppelstangen 6 und 10 mit den Hydraulikzylindern 13 und 19 weiter aufgerichtet werden. Gleichzeitig wird die teleskopierbare Koppelstange 6 zusammengefahren, wodurch der Teilrahmen 8 abgesenkt wird. Vor dem Erreichen der Transportstellung werden gemäß Figur 4 die äußeren Teilrahmen 8 und 12 gegenüber dem mittleren Teilrahmen 4 und etwa parallel zueinander verkippt. Beide Teilrahmen 8 und 12 fallen in der Richtung von der teleskopierbaren Koppelstange 6 zu der weiteren Koppelstange 10 hin ab. Hierdurch wird der Abstand zwischen Geräten an den Teilrahmen 8 und 12 vergrößert. Erst mit dem Erreichen der Arbeitsstellung gemäß Figur 5 werden die äußeren Teilrahmen 8 und 12 wieder horizontal und damit parallel zu dem mittleren Teilrahmen 4 ausgerichtet. In der Transportstellung gemäß Figur 5 ist der zweite Teilrahmen 8 über dem ersten Teilrahmen 4 und der dritte Teilrahmen 12 über dem zweiten Teilrahmen 8 angeordnet.

Mit dem Klapprahmen gemäß den Figuren 1 bis 5 ist eine Arbeitsbreite gemäß Figur 1 von neun Metern realisierbar, während gleichzeitig eine Transportbreite von drei Metern und eine Transporthöhe von vier Metern in der Transportstellung gemäß Figur 5 eingehalten werden. Gleichzeitig werden die Teilrahmen 8 und 12 beim Verschwenken von der Arbeitsstellung in die Transportstellung und umgekehrt maximal in eine aus Figur 2 hervorgehende Schräglage zur Horizontalen gebracht, so daß es beispielsweise nicht notwendig ist, an den Teilrahmen 8 und 12 angeordnete Sägeräte vor dem Verschwenken der Teilrahmen 8 und 12 aus der Arbeitsstellung in die Transportstellung zu entleeren.

### BEZUGSZEICHENLISTE

- 1 -: Längsmittelebene
- 2 -: Lagerpunkt
- 2, 3 -: Dreipunktaufhängung
- 4 -: Teilrahmen
- 5 -: Gelenk
- 6 -: Koppelstange
- 7 -: Gelenk
- 8 -: Teilrahmen
- 9 -: Gelenk
- 10 -: Koppelstange

- 11 -: Gelenk
- 12 -: Teilrahmen
- 13 -: Hydraulikzylinder
- 14 -: Lasche
- 15 -: Lasche
- 16 -: Hydraulikzylinder
- 17 -: Lasche
- 18 -: Lasche
- 19 -: Hydraulikzylinder
- 20 -: Lasche

- 21 -: Lasche
- 22 -: Hydraulikzylinder
- 23 -: Lasche
- 24 -: Lasche
- 25 -: Langloch
- 26 -: Bolzen

## Patentansprüche

1. Klapprahmen für eine mehrreihige landwirtschaftliche Maschine, mit einem ersten Teilrahmen (4), der quer zu der Arbeitsrichtung der Maschine angeordnet ist, mit einem zweiten Teilrahmen (8), wobei eine erste Koppelstange (6) derart an den ersten Teilrahmen (4) und an den zweiten Teilrahmen (8) angelenkt ist, daß der zweite Teilrahmen (8) mit einer Schwenkeinrichtung aus einer Arbeitsstellung, in der er quer zu der Arbeitsrichtung der Maschine und neben dem ersten Teilrahmen (4) angeordnet ist, in eine Transportstellung, in der er über dem ersten Teilrahmen (4) und etwa parallel zu diesem angeordnet ist, schwenkbar ist, und mit einem dritten Teilrahmen (12), wobei eine weitere Koppelstange (10) derart an den ersten Teilrahmen (4) und an den dritten Teilrahmen (12) angelenkt ist, daß der dritte Teilrahmen (12) mit der Schwenkeinrichtung aus der Arbeitsstellung, in der er quer zu der Arbeitsrichtung der Maschine und neben dem ersten Teilrahmen (4) angeordnet ist, in die Transportstellung, in der er über dem ersten Teilrahmen (4) und etwa parallel zu diesem angeordnet ist, schwenkbar ist, **dadurch gekennzeichnet,** daß die Schwenkeinrichtung so ausgelegt ist, daß mit der Schwenkeinrichtung die erste Koppelstange (6) gegenüber dem ersten Teilrahmen (4) und davon getrennt der zweite Teilrahmen (8) gegenüber der ersten Koppelstange (6) verschwenkbar ist, daß mit der Schwenkeinrichtung die weitere Koppelstange (10) gegenüber dem ersten Teilrahmen (4) und davon getrennt der dritte Teilrahmen (12) gegenüber der weiteren Koppelstange (10) verschwenkbar ist, und daß die erste Koppelstange (6) zwischen dem ersten Teilrahmen (4) und dem zweiten Teilrahmen (8) derart teleskopierbar ist, daß der zweite Teilrahmen (8) in seine Transportstellung zwischen dem ersten Teilrahmen (4) und dem dritten Teilrahmen (12) bringbar ist.

2. Klapprahmen nach Anspruch 1, **dadurch gekennzeichnet,** daß der zweite Teilrahmen (8) und der dritte Teilrahmen (12) nur über die Koppelstangen (6, 10) mit dem ersten Teilrahmen (4) verbunden sind.

3. Klapprahmen nach Anspruch 1 oder 2, **dadurch gekennzeichnet,** daß die Schwenkeinrichtung jeweils ein erstes Betätigungselement, das zwischen dem ersten Teilrahmen (4) und der jeweiligen Koppelstange (6, 10) wirkt, und eine zweites Betätigungselement, das zwischen dem zweiten Teilrahmen (8) bzw. dem dritten Teilrahmen (12) und der jeweiligen Koppelstange (6) wirkt, aufweist.

4. Klapprahmen nach Anspruch 3, **dadurch gekennzeichnet,** daß das erste Betätigungselement und/oder das zweite Betätigungselement ein Hydraulikzylinder (13, 16;19, 22) ist.

5. Klapprahmen nach einem der Ansprüche 1 bis 4, **dadurch gekennzeichnet,** daß zwischen dem ersten Teilrahmen (4) und der jeweiligen Koppelstange (6, 10) und/oder zwischen dem zweiten Teilrahmen (8) bzw. dem dritten Teilrahmen (12) und der jeweiligen Koppelstange (6, 10) ein Winkelgeber vorgesehen ist.

6. Klapprahmen nach Anspruch 5, **dadurch gekennzeichnet,** daß der Winkelgeber ein Potentiometer ist.

7. Klapprahmen nach einem der Ansprüche 1 bis 6, **dadurch gekennzeichnet,** daß in der Arbeitsstellung der zweite Teilrahmen (8) gegenüber der ersten Koppelstange (6) und der dritte Teilrahmen (12) gegenüber der weiteren Koppelstange (10) zumindest über einen begrenzten Winkel frei verschwenkbar ist.

8. Klapprahmen nach Anspruch 7, **dadurch gekennzeichnet,** daß der zweite Teilrahmen (8) gegenüber der Koppelstange (6) und ggf. der dritte Teilrahmen (12) gegenüber der weiteren Koppelstange (10) ein Winkelspiel von der Größe des begrenzten Winkels aufweist, das durch einen in einem Langloch (25) geführten Bolzen (26) definiert ist.

9. Klapprahmen nach einem der Ansprüche 1 bis 8, **dadurch gekennzeichnet,** daß eine Steuerung für die Schwenkeinrichtung vorgesehen ist, die beim Überführen des zweiten Teilrahmens (8) und des dritten Teilrahmens (12) aus der Arbeitsstellung in die Transportstellung zunächst die Koppelstange (6 bzw. 10) gegenüber dem ersten Teilrahmen (4) verschwenkt und dabei die Winkellage zwischen der Koppelstange (6 bzw. 10) und dem zweiten bzw. dritten Teilrahmen (8 bzw. 12) festhält, und die zum Erreichen der Transportstellung der beiden Teilrahmen (8, 12) beim Aufeinanderzuschwenken der beiden Koppelstangen (6, 10) den zweiten Teilrahmen (8) und den dritten Teilrahmen (12) etwa parallel zueinander gegenüber dem ersten Teilrahmen (4) verkippen, wobei der zweite Teilrahmen (8) von dem dritten Teilrahmen (12) weg von unten schräg nach oben ausgerichtete ist.

10. Klapprahmen nach einem der Ansprüche 1 bis 9, **dadurch gekennzeichnet,** daß an dem ersten, dem zweiten und dem dritten Teilrahmen (4, 8, 12) Geräte der mehrreihigen landwirtschaftlichen Maschine gelagert sind.

## Claims

1. Folding frame for a multi-row agricultural machine, having a first partial frame (4), which is arranged at right angles to the direction of operation of the machine, further having a second partial frame (8), a first coupling bar (6) being jointed to the first partial frame (4) and to the second partial frame (8) in such a way that the second partial frame (8), by a swivel means, may be swivelled out of a working position, in which it is arranged at right angles to the direction of operation of the machine and side by side with the first partial frame (4), into a transport position, in which it is arranged above and about parallel to the first partial frame, and having a third partial frame (12), a further coupling bar (10) being jointed to the first partial frame (4) and to the third partial frame (12) in such a way that the third partial frame (12), by the swivel means, may be swivelled out of the working position, in which it is arranged at right angles to the direction of operation of the machine and side by side with the first partial frame (4), into the transport position, in which it is arranged above and about parallel to the first partial frame (4), characterized in that the swivel means is provided in such a way that, by the swivel means, the first coupling bar (6) may be swivelled with regard to the first partial frame (4) and the second partial frame (8) may be swivelled with regard to the first coupling bar (6), independently of each other, that, by the swivel means, the further coupling bar (10) may be swivelled with regard to the first partial frame (4) and the third partial frame (12) may be swivelled with regard to the further coupling bar (10), independently of each other, and that the first coupling bar (6) may be telescoped between the first partial frame (4) and the second partial frame (8) in such a way that the second partial frame (8) may be brought into its transport position between the first partial frame (4) and the third partial frame (12).

2. Folding frame according to claim 1, **characterized in that** the second partial frame (8) and the third partial frame (12) are connected to the first partial frame (4) via the coupling bars (6, 10), only.

3. Folding frame according to claim 1 or 2, **characterized in that** the swivel means for each coupling bar (6) comprises a first actuation element, which is operative between the first partial frame (4) and the respective coupling bar (6, 10), and a second actuation element, which is operative between the second partial frame (8) or the third partial frame (12) and the respective coupling bar (6).

4. Folding frame according to claim 3, **characterized in that** the first actuation element and/or the second actuation element is a hydraulic cylinder (13, 16; 19, 22).

5. Folding frame according to one of the claims 1 to 4, **characterized in that** an angle indicator is provided between the first partial frame (4) and the corresponding coupling bar (6, 10) and/or between the second partial frame (8) or the third partial frame (12) and the respective coupling bar (6, 10).

6. Folding frame according to claim 5, **characterized in that** the angel indicator is a potentiometer.

7. Folding frame according to one of the claims 1 to 6, **characterized in that,** in the operation position, the second partial frame (8) is freely swivelling with regard to the first coupling bar (6), and the third partial frame (12) is freely swivelling with regard to the further coupling bar (10), both within a limited angle.

8. Folding frame according to claim 7, **characterized in that** the second folding frame (8) has an angle play with regard to the coupling bar (6) and the third partial frame (12) has angle play with regard to the further coupling bar (6), the angle play having the value of the limited angle and being defined by a bolt (26) being guided within a elongated hole (25).

9. Folding frame according to one of the claims 1 to 8, **characterized in that** a control is provided for the swivel means, which, in transferring the second partial frame (8) and the third partial frame (12) out of the operation position into the transport position, at first swivels the coupling bar (6 or 10) with regard to the first partial frame (4) and at the same time remains the angle between the coupling bar (6 or 10) and the second or third partial frame (8 or 12) unchanged, and which, for reaching the transport position of both partial frames (8, 12) upon swivelling both coupling bars (6, 10) against each other, tilts the second partial frame (8) and the third partial frame (12) in an about parallel arrangement of these partial frames with regard to the first partial frame (4), the second partial frame (8) having an ascending orientation as it is facing away from the third partial frame (12).

10. Folding frame according to one of the claims 1 to 9, **characterized in that** devices of the multi-row agricultural machines are supported by the first, the second and the third partial frame (4, 8, 12).

## Revendications

1. Châssis repliable pour une machine aratoire à plusieurs rangs, avec un premier châssis partiel (4) qui est disposé transversalement à la direction de travail de la machine, avec un deuxième châssis partiel (8), une première barre d'accouplement (6) étant articulée au premier châssis partiel (4) et au deuxième châssis partiel (8) de telle manière que le deuxième châssis partiel (8) peut pivoter, au moyen d'un dispositif de pivotement, depuis une position de travail dans laquelle il est disposé transversalement à la direction de travail de la machine et à côté du premier châssis partiel (4), dans une position de transport dans laquelle il est disposé au-dessus du premier châssis partiel (4) et sensiblement parallèle à celui-ci, et avec un troisième châssis partiel (12), une autre barre d'accouplement (10) étant articulée au premier châssis partiel (4) et au troisième châssis partiel (12) de telle manière que le troisième châssis partiel (12) peut pivoter, au moyen du dispositif de pivotement, depuis la position de travail dans laquelle il est disposé transversalement à la direction de travail de la machine et à côté du premier châssis partiel (4), dans la position de transport dans laquelle il est disposé au-dessus du premier châssis partiel (4) et sensiblement parallèle à celui-ci,
caractérisé en ce
que le châssis repliable de pivotement est agencé de telle manière que, au moyen du dispositif de pivotement, la première barre d'accouplement (6) peut pivoter par rapport au premier châssis partiel (4) et séparément, le deuxième châssis partiel (8) peut pivoter par rapport à la première barre d'accouplement (6),
que l'autre barre d'accouplement (10) peut pivoter, au moyen du dispositif de pivotement, par rapport au premier châssis partiel (4) et, séparément, le troisième châssis partiel (12) peut pivoter par rapport à l'autre barre d'accouplement (10) et
que la première barre d'accouplement (6) est montée télescopique entre le premier châssis partiel (4) et le deuxième châssis partiel (8) de telle manière que le deuxième châssis partiel (8) peut être amené dans sa position de transport entre le premier châssis partiel (4) et le troisième châssis partiel (12).

2. Châssis repliable selon la revendication 1,
caractérisé en ce que le deuxième châssis partiel (8) et le troisième châssis partiel (12) ne sont reliés au premier châssis partiel (4) que par l'intermédiaire des barres d'accouplement (6, 10).

3. Châssis repliable selon la revendication 1 ou 2,
caractérisé en ce que le dispositif de pivotement présente respectivement un premier élément d'actionnement qui agit entre le premier châssis partiel (4) et la barre d'accouplement (6, 10) respective et un second élément d'actionnement qui agit entre le deuxième châssis partiel (8) ou respectivement le troisième châssis partiel (12) et la barre d'accouplement (6) respective.

4. Châssis repliable selon la revendication 3,
caractérisé en ce que le premier élément d'actionnement et/ou le second élément d'actionnement sont un vérin hydraulique (13, 16 ; 19, 22).

5. Châssis repliable selon l'une des revendications 1 à 4,
caractérisé en ce qu'un capteur angulaire est prévu entre le premier châssis partiel (4) et la barre d'accouplement (6, 10) respective et/ou entre le deuxième châssis partiel (8) ou respectivement le troisième châssis partiel (12) et la barre d'accouplement (6, 10) respective.

6. Châssis repliable selon la revendication 5,
caractérisé en ce que le capteur angulaire est un potentiomètre.

7. Châssis repliable selon l'une des revendications 1 à 6,
caractérisé en ce que, dans la position de travail, le deuxième châssis partiel (8) est pivotant librement au moins sur un angle limité par rapport à la première barre d'accouplement (6) et le troisième châssis pivotant (12) est pivotant librement au moins sur un angle limité par rapport à l'autre barre d'accouplement (10).

8. Châssis repliable selon la revendication 7,
caractérisé en ce que le deuxième châssis partiel (8) par rapport à la barre d'accouplement (6) et le cas échéant le troisième châssis partiel (12) par rapport à l'autre barre d'accouplement (10) présentent un jeu angulaire de la valeur de l'angle limité, qui est défini par un boulon (26) guidé dans un trou oblong (25).

9. Châssis repliable selon l'une des revendications 1 à 8,
caractérisé en ce qu'est prévue une commande pour le dispositif de pivotement laquelle, lors du transfert du deuxième châssis partiel (8) et du troisième châssis partiel (12) depuis la position de travail à la position de transport, fait d'abord pivoter la barre d'accouplement (6 ou respectivement 10) par rapport au premier châssis partiel (4) et maintient en même temps fixe la position angulaire entre la barre d'accouplement (6 ou respectivement 10) et le deuxième ou respectivement le troisième châssis partiel (8 ou respectivement 12), et laquelle, pour atteindre la position de transport des deux châssis partiels (8, 12), lors du pivotement l'une vers l'autre des deux barres d'accouplement (6, 10), fait basculer le deuxième châssis partiel (8) et le troisième châssis partiel (12), sensiblement parallèlement entre eux, par rapport au premier châssis partiel (4), le deuxième châssis (8) étant orienté incliné du bas vers le haut en s'écartant du troisième châssis partiel (12).

10. Châssis repliable selon l'une des revendications 1 à 9,
caractérisé en ce que les outils de la machine aratoire à plusieurs rangs sont montés sur le premier, le deuxième et le troisième châssis partiels (4, 8, 12).
